# EUROPÄISCHE PATENTSCHRIFT

(11) **EP 3 190 901 B1**
(45) Veröffentlichungstag und Bekanntmachung des Hinweises auf die Patenterteilung: **09.10.2019**
(21) Anmeldenummer: 15753008.0
(22) Anmeldetag: 17.08.2015
(51) Int. Cl.: A23G 9/08, A23G 9/22, A23G 9/26

(54) **VORRICHTUNG UND VERFAHREN ZUR HERSTELLUNG VON SPEISEEIS**
DEVICE AND METHOD FOR PRODUCING ICE CREAM
DISPOSITIF ET PROCÉDÉ DE FABRICATION DE GLACE ALIMENTAIRE

(30) Priorität: 12.09.2014 DE 102014113152
(43) Veröffentlichungstag der Anmeldung: 19.07.2017
(73) Patentinhaber: Broser, Christian, 67227 Frankenthal (DE)
(72) Erfinder: Broser, Christian, 67227 Frankenthal (DE)
(74) Vertreter: Patentanwälte Dr. Keller, Schwertfeger Partnerschaft mbB
(86) Internationale Anmeldenummer: PCT/EP2015/068816
(87) Internationale Veröffentlichungsnummer: WO 2016/037800

(56) Entgegenhaltungen:
- EP-A1- 0 956 776
- EP-A2- 0 582 327
- EP-A2- 0 827 696
- WO-A1-98/24325
- WO-A1-2013/154258
- BE-A7- 1 000 657
- FR-A1- 2 609 237
- GB-A- 1 128 525
- US-A- 4 548 045
- US-A- 6 025 003
- US-A1- 2001 009 097
- US-A1- 2005 142 253
- US-A1- 2014 072 681
- LEFEVERE K ET AL: "Ice-cream encounters of the third dimensional kind", NEW FOOD, RUSSELL PUBLISHING, LONDON, GB, Bd. 3, Nr. 2, 1. Januar 2000 (2000-01-01), Seiten 68-69, XP008176902, ISSN: 1461-4642
- RUSSELL P: "Cryo-ZAT added to WCB Ice Cream's portfolio", EUROPEAN DAIRY MAGAZINE, GELSENKIRCHEN, DE, Nr. 3, 1. Januar 2000 (2000-01-01), Seiten 40-41, XP008176903, ISSN: 0936-6318

## Beschreibung

Die vorliegende Erfindung betrifft eine Vorrichtung zur Herstellung von Speiseeis unter Verwendung von mit einem kryogenen Medium abgekühlten Gussformen sowie ein Verfahren zur Herstellung von Speiseeis.

### Technisches Gebiet:

Die konventionelle Herstellung von Speiseeis umfasst mehrere Schritte, wobei zunächst Zutaten entsprechend einer gewünschten Rezeptur zu einem Premix vermengt werden. Dieser wird dann homogenisiert und pasteurisiert, bevor er in Reifetanks zwischengelagert wird. Anschließend wird der Premix mit Luft aufgeschlagen und zu einer softeisähnlichen Konsistenz vorgefroren. Das Frosten und Aufschlagen wurde bisher in getrennten Kühlern mit schnelldrehenden Mischwerkzeugen durchgeführt. Bedarfsweise werden in das Speiseeis Beigaben wie beispielsweise Früchte, Schokolade oder Pralinen eingebracht.

### Stand der Technik:

Die Verwendung von kryogenen Medien wie flüssiger Stickstoff bei der Lebensmittelherstellung ist an sich bekannt. So wird beispielsweise in der DE 197 13 505 A1 für die Einbringung von Beigaben in Speiseeis vorgeschlagen, dass die Beigaben in der kryogenen Flüssigkeit, beispielsweise in flüssigem Stickstoff oder in Kohlensäure, schockgefroren werden.

Bei den bekannten Verfahren zeigt sich, dass die Gefriergeschwindigkeit die Größe und Position der sich bildenden Eiskristalle beeinflusst, was für die Produktqualität entscheidend ist. Werden pflanzliche Gewebe, wie sie beispielsweise in Fruchtmark oder Fruchtstücken vorkommen, langsam gefroren, werden Zellmembranen geschädigt und teilweise zerstört. Beim Auftauen des Fruchteises (z.B. beim Verzehr) tritt Zellwasser aus, was zu einer unschönen Konsistenz des Eises führt.

Auch in der DE 10 2006 019 700 A1 wird die Speiseeismasse direkt mit einem kryogenen Medium (flüssigem Stickstoff) in Kontakt gebracht, wobei das Frosten und Aufschlagen in einem Mischer durchgeführt wird, in dem das kryogene Medium zugeführt wird. In der DE 10 2010 017 928 A1 werden die Speiseeismasse oder Bestandteile davon mit einem kryogenen Medium behandelt, in dem die Zutaten zunächst zu einem Premix vermengt werden und der Premix über ein kryogenes Medium vorgefroren wird. Während des Vorgefrierens werden dem Premix stückige Zusätze zugegeben. Das darin beschriebene Verfahren ermöglicht somit den Eintrag und die Einarbeitung von stückigen Zusätzen in Speiseeis unter Verwendung eines kryogenen Mediums.

In der US 6 025 003 A wird ein Verfahren zur Herstellung eines Eiskonfekts in einer Mehrspaltform beschrieben, wobei die Mehrspaltform vorher bis auf unter -50° C gekühlt wird. Eine kryogene Flüssigkeit wird aus der Mehrspaltform freigesetzt und Eis wird in die Mehrspaltform eingeführt.

US 2005/014 2253 A1 beschreibt ein Verfahren zur Herstellung von einem gefrorenen Alkoholkonfekt, wobei eine Mischung bei einer erhöhten Temperatur für eine vorbestimmte Zeitperiode behalten wird.

Das Dokument "Ice-cream encounters of the third dimensional kind" (LEFEVERE K ET AL, NEW FOOD, RUSSELL PUBLISHING, LONDON, Bd. 3, Nr. 2, 01.01.2000, Seiten 68-69) betrifft eine Vorrichtung zur Herstellung von Eiscremes. Bei der Vorrichtung wird die Form auf eine Temperatur von unter -80° C durch einen Flüssigstickstoff gekühlt. Die Eiscreme ist rund -6° C kalt und hat sich auf dem Boden der Form abgesetzt. Im weiteren Schritt wird ein Gipfel auf die Eiscreme gedrückt, um die Form der Eiscreme zu bilden. Die Eiscreme wird in einem kryogenen Tiefkühlschrank zügig gehärtet, wenn sie sich noch auf dem Boden befindet.

EP 0 582 327 A2 offenbart ein Verfahren zur Herstellung von luftversetzten Eiscremes und Schokoladeneis durch Gefrieren einer wässrigen Flüssigkeit. Eine Form wird auf eine bestimmte Temperatur vorgekühlt, um die gefrorene wässrige Flüssigkeit leicht von der Form abzulösen.

WO 2013/154 258A beschreibt eine Vorrichtung zur Herstellung von gefrorener Nahrung, die eine einfache Struktur hat und die Massenproduktion mit verringerten Kosten ermöglicht. Die Vorrichtung kühlt die Nahrung nach dem Kühlschrankprinzip ab und besteht aus einer befestigten Platte mit einem ersten formgebenden Teil für die gefrorene Nahrung, einem zweiten formgebenden Teil, das mit dem ersten formgebenden Teil die Form der Nahrung bildet und einem dritten formgebenden Teil, das mit dem zweiten formgebenden Teil die Form der Nahrung bildet. Das zweite und dritte formgebende Teil rotieren dabei um eine gegebene Achse der befestigten Platte und geben damit die gefrorene Nahrung frei.

Das Dokument "Cryo-ZAT added to WCB Ice Cream's portfolio" (RUSSELL P, EUROPEAN DAIRY MAGAZINE, GELSENKIRCHEN, DE, Nr. 3, 01.01,2000, Seiten 40-41, XP008176903) betrifft eine Cryo-ZAT Technik zur Herstellung von Eiscremes. Wenn eine Form durch den flüssigen Stickstoff bis -196° C abgekühlt wird, bevor ein Produkt abgesetzt wird, wird eine Eiscreme sofort gefroren. Die gebildete Eiscreme ist daher leicht aus der Form zu entfernen, ohne sie aufzuwärmen.

EP 0 956 776 A1 beschreibt eine Vorrichtung zur Herstellung von Eis. Eine Mischung wird halbgefroren, bevor die Mischung in eine Form eingeführt wird. Die Formen werden durch eine kryogene Flüssigkeit und ein Trägergas gekühlt.

US 2014/072681 A1 offenbart eine Vorrichtung zur Herstellung von Eis am Stiel, die ein Dewargefäß umfasst.

US 2001/009097 A1 offenbart eine Vorrichtung zum Formen von Eissüßwaren durch Befüllen von Behältnissen, die hintereinander mit einer vorbestimmten Menge einer Zusammensetzung durch eine Erstarrungsumgebung laufen.

BE 1 000 657 A7 beschreibt eine Vorrichtung zur Herstellung von Nahrungsmitteln. Das Nahrungsmittel wird in flüssiger Form in eine Form gegeben. Die Form wird gekühlt, um eine gefrorene Masse des Produkts zu bilden. Anschließend wird die Form kurz erwärmt, um die Masse von der Form zu lösen.

GB 1 128 525 A offenbart ein Verfahren zur Herstellung des Konfekts mit den Schritten, dass das flüssige Konfekt in einen aus thermoplastischem Kunststoff bestehende Streifen gefüllt wird und das mit dem Kunststoff bedeckte Konfekt durch eine Kältemaschine gefroren wird und durch eine schneidende Maschine in kleine Packs geschnitten wird.

FR 2 609 237 A1 offenbart ein Verfahren zur Rekonstitution von Obst, Joghurts, Eiscremes, Sorbets und andere Lebensmittelzubereitungen, welches darin besteht, zunächst eine flüssige oder halbflüssige Mischung aus Obst herzustellen, danach das Einführen einer abgemessenen Menge der Mischung in eine Form, das Kühlen der Form auf eine sehr niedrige Temperatur, um in jeder Form eine feste Masse zu erhalten, und zum Schluss die gefrorene Masse aus seiner Form auszustoßen.

EP 0 827 696 A2 offenbart ein Verfahren zum Formen eines Nahrungsmittels mit den folgenden Schritten: Absenken der Temperatur des Nahrungsmittels, so dass das Mittel plastisch ist, und Drücken einer Form gegen das Nahrungsmittel, so dass wenigstens ein Teil des Mittels die Gestalt bzw. Form der Form einnimmt, wobei die Form auf einer ausreichend niedrigen Temperatur ist, wenn die Form gegen das Mittel gedrückt wird, so dass das Mittel seine geformte Gestalt beibehält und das Mittel leicht aus der Form freigebbar ist.

WO 98/24325 A1 offenbart ein Verfahren zur Herstellung eines geformten weichen Stücks Konfekt, und zwar eines Stücks Konfekt, das bei Raumtemperatur vergleichsweise weich und deshalb nur schwer bei Raumtemperatur mechanisch handhabbar ist, wobei das Verfahren den Schritt umfasst, dass die Form zusammen mit der darin eingebrachten Konfektmasse in ein Umfeld mit niedriger Temperatur zwischen 0° C und -196° C gebracht wird, um so zumindest den äußeren Teil der eingebrachten Konfektmasse zu verfestigen, und dass anschließend das so erhaltene verfestigte Stück Konfekt aus der Form genommen wird.

Nachteilig bei der direkten Behandlung von Speiseeis oder dessen Bestandteilen mit einem kryogenen Medium ist, dass unterschiedliche Speiseeisformen und Konsistenzen nur schwer oder gar nicht hergestellt werden können. Insbesondere was die Anforderungen an die Textur und Cremigkeit anbelangt, ist es entscheidend, dass die Bildung von Kristallisationskeimen signifikant vermindert wird, was mit den bislang bekannten Herstellungsverfahren nur mit erheblichem Einsatz diverser Zusatzstoffe und einem großen Volumen an eingebrachter Luft erzielt werden konnte. Auch sind die bekannten Verfahren hinsichtlich der möglichen Rezepturen beschränkt, da für die Erhaltung der Textur und Cremigkeit spezielle Zusatzstoffe erforderlich sind. Die oben beschriebenen Verfahren ermöglichen zudem keine kantigen oder vieleckigen Eisformen.

### Darstellung der Erfindung:

Vor diesem Hintergrund ist es Aufgabe der vorliegenden Erfindung, eine verbesserte Vorrichtung und ein Verfahren zur Herstellung von Speiseeis unter Einsatz eines kryogenen Mediums, insbesondere flüssigen Stickstoffs oder flüssigen Kohlendioxids, bereitzustellen, bei dem auf die Beimengung von Zusatzstoffen für die Erhaltung der Textur, Form und Cremigkeit verzichtet werden kann und bei dem bei gleichzeitiger Realisierung neuer, präziser, kantiger oder vieleckiger Eisformen eine gleichmäßige Kristallisation erreicht wird.

Diese Aufgabe wird gelöst durch eine Vorrichtung mit den Merkmalen des Anspruchs 1 und ein Verfahren mit den Merkmalen des Anspruchs 10. Bevorzugte Ausführungsformen finden sich in den Unteransprüchen wieder.

Die erfindungsgemäße Vorrichtung zur Herstellung von Speiseeis besteht aus mehreren Bearbeitungsstationen, wobei der Kern der Erfindung beim Frosten der zuvor zubereiteten Speiseeismasse unter Verwendung von abgekühlten Gussformen liegt. Die Vorrichtung umfasst ein Tauchbad, beispielsweise eine Wanne oder einen Behälter, mit einem mit einem kryogenen Medium gefüllten Innenraum. Vorzugsweise wird als kryogenes Medium flüssiger Stickstoff verwendet, der von einem Vorratsbehälter bereitgestellt wird. Um eine übermäßige Eisbildung zu verhindern, kann in einer bevorzugten Variante ein Heizdraht oder sonstige Heizeinrichtung innerhalb des Tauchbads zur Temperaturregulierung vorgesehen sein. Erfindungsgemäß ist ferner eine in den Innenraum des Tauchbads bewegbare Kassette vorgesehen, welche eine oder mehrere Gussformen zur Aufnahme von Speiseeismasse aufnehmen kann. Die Gussformen dienen als formgebende Matrize und geben dem Speiseeis die entsprechende geometrische Form. Die Gussformen werden in die Kassette gehängt oder in dieser befestigt, wobei die Kassette vorzugsweise für eine Vielzahl von Gussformen für die Herstellung einer großen Anzahl von Speiseeis, beispielsweise für die Serienproduktion, ausgelegt ist. Vorzugsweise ist die Gussform so ausgestaltet, dass mehrere Stück Speiseeis gefroren und geformt werden können. Vorzugsweise wird die Kassette mit den Gussformen in das kryogene Medium des Tauchbads abgesenkt oder das Tauchbad angehoben und für eine bestimmte Tauchzeit in dem Tauchbad belassen. Die Tauchzeit im Sinne der vorliegenden Erfindung definiert die Kontaktdauer der Gussformen mit dem kryogenen Medium des Tauchbads. Die Tauchzeit ist abhängig von der Art, der Form und dem Material der Gussformen sowie der verwendeten Speiseeismasse. In einer weiteren Variante werden die Gussformen über eine Fördereinrichtung direkt zum Tauchbad befördert und kommen dort mit dem kryogenen Medium in Kontakt. Vorzugsweise werden Gussformen verwendet, die eine hohe Kältespeicherkapazität aufweisen, wobei Gussformen aus Metall bevorzugt sind. Diese sind gegenüber der Behandlung mit dem kryogenen Medium (z.B. Stickstoff, Kohlendioxid) unempfindlich.

Nach Ablauf der Tauchzeit wird die Kassette mit den Gussformen aus dem Tauchbad entfernt. Anschließend werden die Gussformen über eine Befüllöffnung mit der Speiseeismasse gefüllt. Die Befüllung erfolgt vorzugsweise über eine Dosiereinrichtung, mit der eine serielle oder gleichzeitige Befüllung der Gussformen mit der Speiseeismasse möglich ist. Vorzugsweise ist die Dosiereinrichtung automatisiert, beispielsweise unter Zuhilfenahme eines Roboters. Anschließend erfolgt, für eine festgelegte Zeitdauer, das Durchfrieren der Kassetten über eine Prozessstrecke, vorzugsweise in Form eines automatisierten Transportmechanismus für die mit den Gussformen bestückten Kassetten.

Die erfindungsgemäße Vorrichtung umfasst ferner vorzugsweise eine Wärmeeinrichtung zum Antauen der mit Speiseeismasse gefüllten Gussformen, beispielsweise für eine anschließende Weiterverarbeitung, wie z.B. Trocknen, Coaten oder Verpacken. Vorzugsweise handelt es sich bei der Wärmeeinrichtung um ein Wärmebad, bei dem die aus dem mit dem kryogenen Medium gefüllten Tauchbad entnommenen Gussformen oder die Kassette mit Gussformen nach dem Befüllen und der abgelaufenen Durchfrierzeit eingetaucht werden. Das Medium des Wärmebads (z.B. Wasser) weist vorzugsweise eine Temperatur von >0° C, vorzugsweise zwischen 2-10° C oder mehr, auf. Diese Temperaturdifferenz ist ausreichend. Alternativ kann die Wärmeeinrichtung ein Heizmittel zum Erwärmen der Gussformen umfassen, beispielsweise ein Heißluftgebläse, eine Einrichtung zur Mikrowellenbeaufschlagung oder eine Infrarotbelichtungsanlage. In einer solchen Variante kann die Wärmeeinrichtung zu der Kassette mit den Gussformen, oder die Kassette zu der Wärmeeinrichtung bewegt werden.

Für die Herstellung von Speiseeis ist zumeist das Setzen von Stielen erforderlich. In einer bevorzugten Variante erfolgt mit oder nach der Befüllung der Gussformen mit der Speiseeismasse das Setzen von Stielen. Unmittelbar nach der Befüllung der Gussformen mit der Speiseeismasse ist der Kern des Speiseeises im Gegensatz zu dessen Hülle noch nicht gefroren, so dass die Stiele leicht eingesetzt werden können. Erst mit zunehmender Durchfrierzeit wird das Speiseeis, durch Abgabe von Kälteenergie der Gussformen an das Speiseeis, vollständig durchfroren und dadurch auch fest mit den Stielen verbunden. Für das Setzen der Stiele ist eine Bestieleinrichtung vorgesehen, mit der die Stielsetzung entweder seriell oder gleichzeitig erfolgen kann. Vorzugsweise ist auch dieser Vorgang automatisiert, beispielsweise unter Verwendung eines Roboters. Nach dem Frosten der Speiseeismasse erfolgt das Überführen der Gussformen zu einer möglichen optionalen Wärmeeinrichtung, um die Speiseeismasse für anschließende Weiterverarbeitungsschritte, wie zum Beispiel einem Verpacken, Coaten oder Trocknen zu lösen.

Die einzelnen Arbeitsschritte sind letztendlich abhängig von der Anzahl und Größe der gesamten Speiseeisproduktionsanlage und der Kapazität der zu verarbeitenden Gussformen. So erfolgt das Eintauchen der Gussformen in das mit dem kryogenen Medium gefüllte Tauchbad für eine zum Abkühlen der Gussformen vorgegebene Tauchzeit, welche vorzugsweise weniger als 3 min (180 Sekunden), besonders bevorzugt weniger als 1:30 min (90 Sekunden) beträgt. Nach der anschließenden Befüllung der in dem kryogenen Medium heruntergekühlten Gussformen wird die Speiseeismasse in den Gussformen für eine Zeitdauer gefrostet, die ausreicht, um die Speiseeismasse bis zum Kern durchzufrieren, aber Rissbildung dabei zu vermeiden. Gleichzeitig werden die Stiele gesetzt. Vorzugsweise dauert dieser Vorgang weniger als zwei Minuten.

Die erfindungsgemäße Vorrichtung umfasst in einer bevorzugten Ausführungsform Sensoren zur Niveauregulierung des Flüssigkeitsspiegels des flüssigen kryogenen Mediums im Innenraum des Tauchbads, über einen mit dem Tauchbad verbundenen Vorratsbehälter für das kryogene Medium. Dabei wird das Flüssigkeitsniveau des kryogenen Mediums im Tauchbad ermittelt und mit einem Soll-Niveau (Intervall) verglichen. Bei Unterschreiten des Ist-Wertes gegenüber einem festgelegten Minimumwert für das Soll-Niveau erfolgt eine Befüllung des Tauchbads über eine Stickstoffzufuhr zur Aufrechterhaltung des Flüssigkeitsspiegels. Das Soll-Niveau lässt daher einen gewissen Spielraum bzw. Toleranz für die Nachversorgung des Tauchbades mit dem kryogenen Medium, insbesondere deshalb, weil die Flüssigkeit im Tauchbad "arbeitet" und nicht still steht. Vorzugsweise handelt es sich bei dem Vorratsbehälter um einen Stickstoffreservetank, der über Leitungen mit dem Innenraum des Tauchbads verbunden ist. Über eine Steuerung werden bedarfsweise Ventile geöffnet, um ein gleichmäßiges Flüssigkeitsniveau im Innenraum des Tauchbads sicherzustellen.

In einer bevorzugten Ausführungsform umfasst die Vorrichtung eine Hubeinrichtung, mit der ein Absenken und/oder Anheben der Kassette oder des mit dem kryogenen Medium gefüllten Tauchbades möglich ist. Die Hubeinrichtung ist insbesondere bei einer Kleinserienherstellung vorteilhaft. Die Hubeinrichtung umfasst eine Steuerung, welche in Abhängigkeit der Tauchzeit und/oder der Temperatur der in das Tauchbad eingetauchten Gussformen die Hubbewegung der Hubeinrichtung kontrolliert. Ist die erforderliche Tauchzeit und/oder Temperatur zum Herunterkühlen der Gussformen im mit dem kryogenen Medium gefüllten Tauchbad erreicht, ermöglicht die Steuerung das Anheben der Kassette bzw. das Absenken des Tauchbades für die anschließende Befüllung der Gussformen. Alternativ kann die Hubeinrichtung auch durch eine Fördereinrichtung, beispielsweise einem Taktband, ersetzt werden.

In einer bevorzugten Variante umfasst die Kassette einzelne voneinander abgetrennte Kompartimente zur Aufnahme der einzelnen Gussformen. Der Boden der Kassette ist vorzugsweise an dessen Unterseite offen, so dass die Gussformen vollständig in Kontakt mit dem kryogenen Medium kommen können. Die Kompartimente werden durch Zwischenwände voneinander getrennt. Die Gussformen liegen beidseitig der Längsseiten der Kassette auf daran ausgebildeten Trägerelementen auf. Zur Erhöhung des Arbeitsschutzes ist die Kassette in einem Käfig aus Lochblech oder Metallnetz aufgenommen. Das Lochblech oder das Metallnetz stellt sicher, dass ein Arbeiter nicht unbeabsichtigt von oben in das Tauchbad mit der kryogenen Flüssigkeit greifen kann. Gleichzeitig wird eine ausreichende Umströmung der Gussformen mit dem kryogenen Medium sichergestellt.

Die Gussformen selbst bestehen vorzugsweise aus zwei aufklappbaren Hälften, die an der Oberseite wenigstens einen Einfülltrichter für die Speiseeismasse und körperhafte Formprofile für das Speiseeis umfassen. Im geschlossenen Zustand werden die einzelnen Gussformhälften von einem Verschlussmechanismus zusammengehalten. Hierbei kann beispielsweise eine Klemmverbindung, Rastverbindung oder Schnappverbindung als Verschlussmechanismus gewählt werden. Die Ausgestaltung der körperhaften Formprofile hängt letztendlich davon ab, welche Eisformen hergestellt werden sollen. Die Profile stellen somit Matrizen für die jeweiligen Eisformen dar und können eine beliebige Geometrie aufweisen.

Die Verwendung von flüssigem Stickstoff als kryogenes Medium ist bevorzugt, da sich im Vergleich zu flüssigem Kohlendioxid niedrigere Temperaturen von bis zu -196 °C erzielen lassen. Durch die extrem hohe Temperaturdifferenz wird ein effizientes Schockfrosten der Speiseeismasse ermöglicht.

Das erfindungsgemäße Verfahren hat den Vorteil, dass sich aufgrund des Schockfrostens auch innerhalb der Zelle Eiskristalle bilden können, was zu einer gleichmäßigen Kristallisation beispielsweise in einem pflanzlichen Gewebe (z.B. Fruchtmark oder Fruchtstückchen) führt. Selbst nach dem Auftauen bleibt die Textur des Eises dadurch weitgehend erhalten, und der Austritt von Zellwasser ist im Vergleich zu herkömmlichen Methoden geringer. Somit ist auch der Verzehr des Fruchteises beim Auftauen angenehmer.

Durch das erfindungsgemäße Verfahren werden zudem amorphe Kristallstrukturen vermieden, indem die Größe und Anzahl der Kristallisationskeime signifikant minimiert werden. Das erfindungsgemäß hergestellte Speiseeis weist aufgrund des rapiden Temperatursturzes eine Textur und Cremigkeit auf, die mit herkömmlichen Herstellungsverfahren nur mit erheblichem Einsatz unterschiedlicher Zusatzstoffe und einer großen Menge an eingebrachter Luft zu erzielen wären. Das erfindungsgemäße Verfahren eignet sich zudem zur Beimengung von Zugaben wie beispielsweise Fruchtstücken, Pralinen oder anderen Komponenten, wie sie auf dem Gebiet der Speiseeisherstellung bekannt sind. Das Herstellungsverfahren lässt hierbei die Einbringung neuer Rezepturen zu, da die Herstellung vollständig durch biologische Zutaten ohne Zusatzstoffe erfolgen kann. So lassen sich beispielsweise veganes Eis oder alkoholhaltige Rezepturen (auch als Eis am Stiel) ohne Weiteres umsetzen. Je nach Art des Speiseeises müssen die erforderlichen Tauchzeiten beim Tauchvorgang bzw. die Durchfrierzeiten der Gussformen mit der Speiseeismasse optimiert werden. Im Vergleich zu herkömmlichen Verfahren ist das erfindungsgemäße Herstellungsverfahren nicht länger konsistenzorientiert, also nicht abhängig von einem festen Verhältnis zwischen Zucker, Fett und Luft. Dies ermöglicht eine rezeptorientierte Herstellung von Speiseeis, wodurch gesündere und bislang nur mit hohem Aufwand zu bewerkstelligende Rezepturen umgesetzt werden können. Eine beispielhafte Speiseeismasse umfasst in einer Variante Joghurt mit Mango-Püree, Rosmarin, Kokosmilch, Madagaskarvanille, Kokosblütensirup, jedoch keine unnötigen Zusatzstoffe.

Das erfindungsgemäße Herstellungsverfahren ermöglicht zudem die Herstellung von präzisen, kantigen und vieleckigen Eisformen, was mit der herkömmlichen Technik nicht möglich wäre. Dies trägt maßgeblich zu einem hohen Wiedererkennungswert bei. Die erfindungsgemäßen Gussformen ermöglichen Eismatrizen, die in ihrer Beschaffenheit und ihren Werkstoffen eine gleichmäßige Abgabe der Kälteenergie an die Speiseeismasse sicherstellen.

### Kurze Beschreibung der Zeichnungen:

Die Erfindung wird in den nachfolgenden Zeichnungen näher erläutert. Es zeigt
- Fig. 1: eine Übersicht über das erfindungsgemäße Verfahren und einige Vorrichtungsbestandteile,
- Fig. 2: eine Ausführungsform einer Kassette zur Aufnahme von Gussformen,
- Fig. 3: ein Ausführungsbeispiel einer Gussform für die Speiseeismaschine

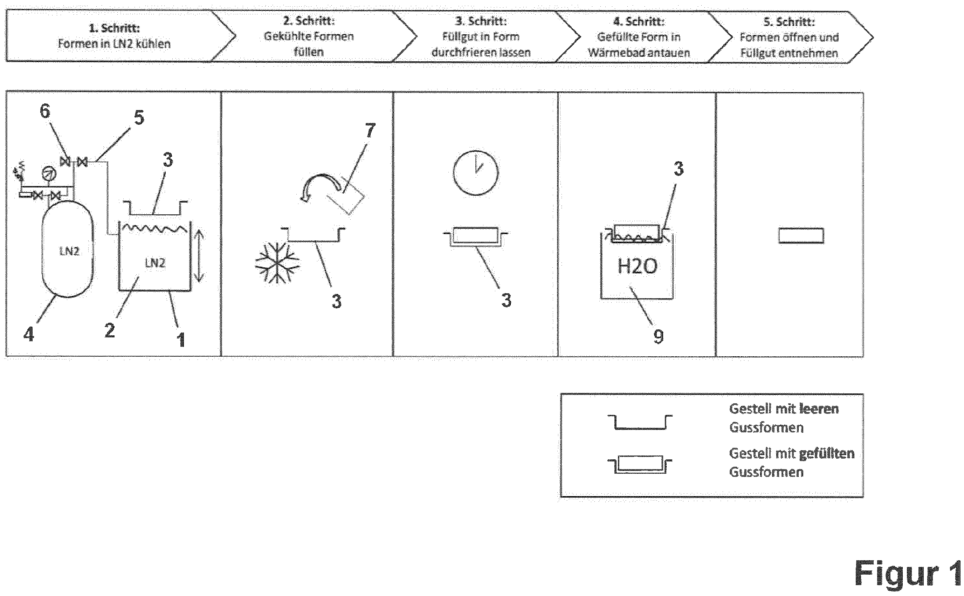

In Fig. 1 ist der Ablauf des erfindungsgemäßen Verfahrens schematisch gezeigt. In einem ersten Schritt erfolgt die Abkühlung der Gussformen 8 in einem Tauchbad 1 mit Hilfe von flüssigem Stickstoff als kryogenes Medium. Das Tauchbad 1 besitzt einen Innenraum 2, der mit dem kryogenen Medium gefüllt ist, welches wiederum von einem Vorratsbehälter 4 bereitgestellt wird. Die Stickstoffzufuhr erfolgt über Versorgungsleitungen 5, welche über Ventile 6 verschließbar sind. Die Ventilsteuerung (nicht dargestellt) kann beispielsweise abhängig sein von dem Flüssigkeitsniveau in dem Tauchbad 1.

Die Gussformen 8 (nicht dargestellt) werden über eine Kassette 3 in das Tauchbad 1, vorzugsweise über eine Hubeinrichtung, überführt, und verbleiben dort für eine Tauchzeit, die ausreicht, um die erwünschte Temperaturdifferenz zu erhalten.

Alternativ können die Kassetten 3 mit einer geeigneten Fördereinrichtung durch das Tauchbad 1 bewegt werden (nicht dargestellt). Nach dem Abkühlen der Gussformen 8 in dem Tauchbad 1 werden die Kassetten 3 mit den Gussformen 8 aus dem Tauchbad 1 entfernt, so dass im nächsten Schritt eine Befüllung der Gussformen 8 mit der Speiseeismasse erfolgen kann. Zum Befüllen ist eine Befülleinrichtung 7 für die Speiseeismasse vorgesehen, schematisch dargestellt durch einen Behälter. Je nach Anlagenausgestaltung kommen Dosiereinrichtungen wie Pipetten oder Pistolen zum Einsatz, die vorzugsweise vollautomatisiert bzw. robotergesteuert sind. Nach dem Befüllen und Bestielen wird in einem dritten Schritt die Frostung durchgeführt, bei dem die Speiseeismasse gefroren wird. Hierzu werden die Kassetten 3 mit den Gussformen 8 vorzugsweise über einen Fördermechanismus für eine festgelegte, von der jeweiligen Rezeptur abhängige Durchfrierzeit gefroren. Das Füllgut erhält durch die Matrize der Gussformen 8 die erwünschte Form. Gleichzeitig kann bei diesem Verfahrensschritt, vorzugsweise zu Beginn, auch das Setzen der Stiele erfolgen. Dies ist so lange möglich, solange der Kern der Speiseeismasse nicht vollständig gefroren ist. In einem vierten Schritt erfolgt das Lösen des Speiseeises aus den Gussformen 8 durch Behandlung in einer Wärmeeinrichtung 9. Hierzu wird die Kassette 3 mit den Gussformen 8 (oder nur die einzelnen Gussformen 8) in die Wärmeeinrichtung 9, in der gezeigten Ausführungsform ein Wärmebad mit Warmwasser, getaucht. Anschließend können im nachfolgenden fünften Schritt die Formen geöffnet und das Kühlgut entnommen werden. Alternativ kann das Lösen des Speiseeises aus den Gussformen auch über ein Heißluftgebläse erfolgen.

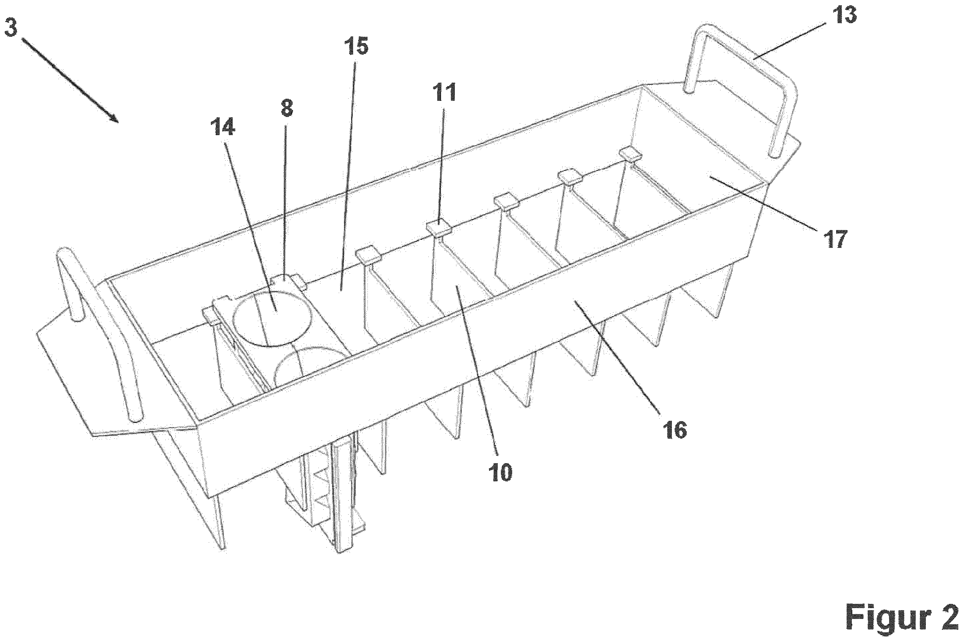

In Fig. 2 ist eine Kassette 3 zur Aufnahme der einzelnen Gussformen 8 gezeigt. Der Boden 15 der Kassette 3 ist hierbei offen, so dass die Gussformen 8 von unten mit dem kryogenen Medium umspült werden können. Die einzelnen Gussformen 8 werden in voneinander getrennte Kompartimente gegeben, welche von Zwischenwänden 10 voneinander getrennt sind. An den Längsseiten 16 der Kassette 3 befinden sich Trägerelemente 11 zum Halten der Gussformen 8. Bei den Gussformen 8 ist von oben der Einfülltrichter 14 für die Speiseeismasse zu erkennen. An den Stirnseiten 17 befinden sich zudem Haltebügel 13 zum händischen Tragen oder zum Einhängen der Kassette 3 in eine Fördereinrichtung.

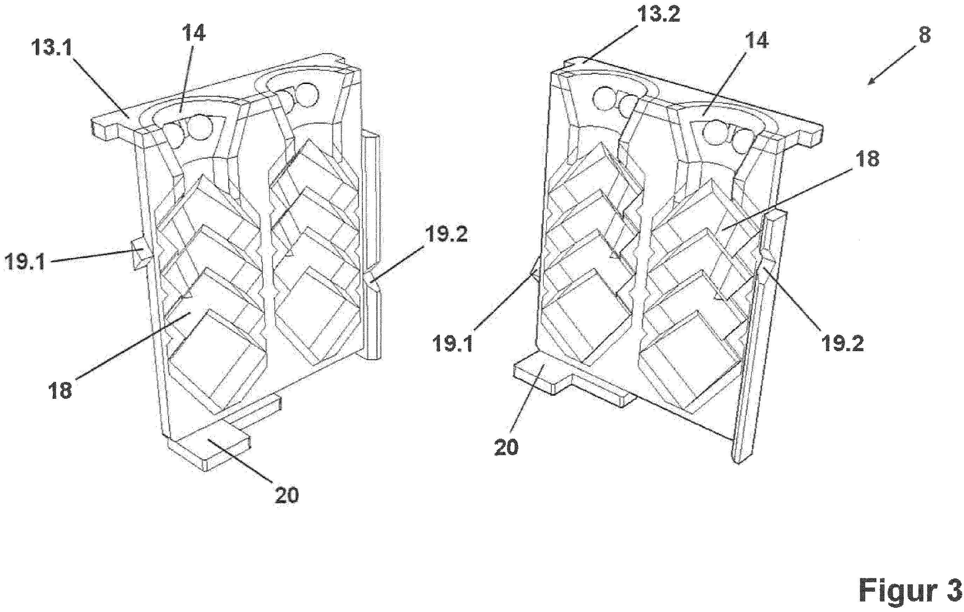

In Fig. 3 ist ein Ausführungsbeispiel einer erfindungsgemäßen Gussform 8 gezeigt. Diese besteht aus zwei aufklappbaren Hälften 13.1, 13.2. Im Inneren sind zwei körperhafte Formprofile 18 zur Erzeugung des geometrischen Erscheinungsbildes des Speiseeises zu erkennen. In der gezeigten Ausführungsvariante lassen sich somit zwei Stück Speiseeis herstellen. Über entsprechende Klemmelemente 19.1, 19.2lassen sich die beiden Hälften 13.1, 13.2 zusammenklappen und verrasten. In der gezeigten Variante rastet die Klemmnase 19.1 der ersten Gussformhälfte 13.1 in eine komplementäre Klemmmulde 19.2 der zweiten Gussformhälfte 13.2. Ferner sind noch Halteelemente 20 am Boden der Gussform 8 zu erkennen. Die Befüllung erfolgt bei den gekühlten Gussformen 8 jeweils über einen Einfülltrichter 14 an der Oberseite der Gussformen 8.

## Patentansprüche

1. Vorrichtung zur Herstellung von Speiseeis, umfassend
- ein Tauchbad (1) mit einem mit flüssigem kryogenen Medium gefüllten Innenraum (2),
- wenigstens eine in den Innenraum (2) des Tauchbads (1) bewegbare Kassette (3) mit darin angeordneten Gussformen (8) zur Aufnahme von Speiseeismasse,
- eine Befülleinrichtung (7) zum Befüllen der Gussformen (8) mit der Speiseeismasse,
- eine Bestieleinrichtung zum Setzen von Stielen,
**dadurch gekennzeichnet, dass** die Gussformen (8) aus zwei aufklappbaren Hälften (13.1, 13.2) bestehen, die als formgebende Matrize dienen, um dem Speiseeis die entsprechende geometrische Form zu geben, wobei die beiden Hälften (13.1, 13.2) zur Erzeugung des geometrischen Erscheinungsbildes einen Einfülltrichter (14) und körperhafte Formprofile (18) für das Speiseeis umfassen und im geschlossenen Zustand von einem Verschlussmechanismus zusammengehalten werden.

2. Vorrichtung nach Anspruch 1, **dadurch gekennzeichnet, dass** ferner eine Wärmeeinrichtung (9) zum Antauen der mit Speiseeismasse gefüllten Gussformen (8) für eine anschließende Weiterverarbeitung des Speiseeises vorgesehen ist.

3. Vorrichtung nach Anspruch 1, **dadurch gekennzeichnet, dass** das Tauchbad (1) Sensoren zur Niveauregulierung des Flüssigkeitsspiegels des flüssigen kryogenen Mediums im Innenraum (2) über einen mit dem Tauchbad (1) verbundenen Vorratsbehälter (4) für das kryogene Medium umfasst.

4. Vorrichtung nach Anspruch 1, **dadurch gekennzeichnet, dass** eine Hubeinrichtung vorgesehen ist, mit der zum Eintauchen der Kassette (3) ein Anheben und ein Absenken des Tauchbades (1) oder alternativ ein Absenken und Anheben der Kassette (3) erfolgt, wobei die Hubeinrichtung eine Steuerung umfasst, welche in Abhängigkeit der Tauchzeit der in das Tauchbad (1) eingetauchten Gussformen (8) die Hubbewegung der Hubeinrichtung kontrolliert.

5. Vorrichtung nach Anspruch 1, **dadurch gekennzeichnet, dass** eine Fördereinrichtung vorgesehen ist, mit der die Kassetten (3) zum Tauchbad (1) beförderbar sind.

6. Vorrichtung nach Anspruch 1, **dadurch gekennzeichnet, dass** die Kassette (3) einzelne voneinander abgetrennte Kompartimente zur Aufnahme der einzelnen Gussformen (8) umfasst, wobei der Boden (15) der Kassette (3) an dessen Unterseite offen ist, die Kompartimente durch Zwischenwände (10) voneinander getrennt sind und die Gussformen (8) beidseitig der Längsseiten (16) der Kassette (3) auf Trägerelementen (11) aufliegen.

7. Vorrichtung nach Anspruch 1, **dadurch gekennzeichnet, dass** zum Arbeitsschutz die Kassette (3) in einem Käfig aus Lochblech oder Metallnetz aufgenommen ist.

8. Vorrichtung nach Anspruch 2, **dadurch gekennzeichnet, dass** die Wärmeeinrichtung (9) ein Wärmebad oder ein Heißluftgebläse umfasst.

9. Vorrichtung nach Anspruch 1 bis 8, **dadurch gekennzeichnet, dass** im Tauchbad (1) zusätzlich ein Heizdraht vorgesehen ist.

10. Verfahren zur Herstellung von Speiseeis, bei dem eine Gussform durch eine Behandlung mit einem kryogenen Medium zunächst abgekühlt und anschließend mit der Speiseeismasse gefüllt wird, umfassend:
a. Bereitstellen eines Tauchbads mit einem mit dem flüssigen kryogenen Medium gefüllten Innenraum,
b. Überführen der Gussformen in das Tauchbad für eine zum Abkühlen der Gussformen vorgegebene Tauchzeit,
c. Herausbefördern der abgekühlten Gussformen aus dem Tauchbad und Befüllen der Gussformen mit Speiseeismasse,
d. Frosten der Speiseeismasse in den Gussformen für eine Zeitdauer, die ausreicht, um die Speiseeismasse bis zum Kern durchzufrieren, unter Vermeidung von Rissbildung
e. Setzen von Stielen in der Speiseeismasse gleichzeitig oder nach dem Befüllen der Gussformen mit Speiseeismasse,
**dadurch gekennzeichnet, dass** die Gussformen aus zwei aufklappbaren Hälften aufgebaut werden und als formgebende Matrize dienen, um dem Speiseeis die entsprechende geometrische Form zu geben, wobei die beiden Hälften der Gussformen zur Erzeugung des geometrischen Erscheinungsbildes einen Einfülltrichter und körperhafte Formprofile für das Speiseeis umfassen und im geschlossenen Zustand von einem Verschlussmechanismus zusammengehalten werden.

11. Verfahren nach Anspruch 10, **dadurch gekennzeichnet, dass** das Flüssigkeitsniveau des flüssigen kryogenen Mediums im Tauchbad ermittelt und mit einem Soll-Niveau verglichen wird, wobei bei Unterschreiten des Ist-Wertes gegenüber dem Minimumwert des Soll-Wert-Niveaus eine Befüllung des Tauchbads über eine Mediumzufuhr zur Aufrechterhaltung des Flüssigkeitsspiegels erfolgt.

12. Verfahren nach Anspruch 10, **dadurch gekennzeichnet, dass** die Gussformen über eine Dosiereinrichtung seriell oder gleichzeitig mit der Speiseeismasse gefüllt werden.

13. Verfahren nach Anspruch 10, **dadurch gekennzeichnet, dass** mit oder nach der Befüllung der Gussformen mit der Speiseeismasse das Setzen von Stielen in das Speiseeis erfolgt.

14. Verfahren nach Anspruch 10, **dadurch gekennzeichnet, dass** das Überführen der Gussformen in das Tauchbad durch Eintauchen erfolgt.

15. Verfahren nach Anspruch 10, **dadurch gekennzeichnet, dass** das Behandeln der Gussformen mit der Wärmeeinrichtung ein Eintauchen in ein Wärmebad oder eine Heißluftbehandlung umfasst.

## Claims

1. Device for the production of ice cream, comprising
- an immersion bath (1) which has an interior (2) which is filled with a cryogenic liquid medium,
- at least one case (3) which can be moved into the interior (2) of the immersion bath (1) and has moulds (8) arranged therein for receiving ice cream mass,
- a filling apparatus (7) for filling the moulds (8) with the ice cream mass,
- a stick-placement apparatus for placing sticks,
**characterised in that** the moulds (8) consist of two hinged halves (13.1, 13.2) which act as shaping cavity to give the ice cream the corresponding geometric shape, the two halves (13.1, 13.2) comprising a filling funnel (14) and three-dimensional shaping profiles (18) for the ice cream, in order to create the geometric appearance, and being held together in the closed state by a locking mechanism.

2. Device according to claim 1, **characterised in that** a heating apparatus (9) is also provided for thawing the moulds (8) filled with ice cream for subsequent further processing of the ice cream.

3. Device according to claim 1, **characterised in that** the immersion bath (1) comprises sensors for regulating the liquid level of the cryogenic liquid medium in the interior (2) by means of a reservoir (4) for the cryogenic medium that is connected to the immersion bath (1).

4. Device according to claim 1, **characterised in that** a lifting apparatus is provided, by means of which the immersion bath (1) is lifted and lowered, or, alternatively, the case (3) is lowered and lifted, in order to immerse the case (3), the lifting apparatus comprising a controller which controls the lifting movement of the lifting apparatus on the basis of the immersion time of the moulds (8) immersed in the immersion bath (1).

5. Device according to claim 1, **characterised in that** a conveying apparatus is provided, by means of which the cases (3) can be conveyed to the immersion bath (1).

6. Device according to claim 1, **characterised in that** the case (3) comprises individual, separated compartments for receiving the individual moulds (8), the base (15) of the case (3) being open on the underside thereof, the compartments being separated from one another by intermediate walls (10), and the moulds (8) on both sides of the long sides (16) of the case (3) resting on support elements (11).

7. Device according to claim 1, **characterised in that** for the purpose of occupational safety, the case (3) is housed in a cage made of perforated metal sheeting or metal mesh.

8. Device according to claim 2, **characterised in that** the heating apparatus (9) comprises a heat bath or a hot air fan.

9. Device according to claim 1 to 8, **characterised in that** a heating wire is additionally provided in the immersion bath (1).

10. Method for producing ice cream, in which a mould is first cooled by a treatment using a cryogenic medium and is then filled with the ice cream mass, comprising:
a. providing an immersion bath having an interior filled with the cryogenic liquid medium,
b. transferring the moulds into the immersion bath for an immersion time that is predetermined for cooling the moulds,
c. removing the cooled moulds from the immersion bath and filling the moulds with ice cream mass,
d. freezing the ice cream mass in the moulds for a length of time which is sufficient to freeze the ice cream mass to the core while preventing cracks from forming
e. placing sticks in the ice cream mass at the same time as or after filling the moulds with ice cream mass,
**characterised in that** the moulds are made up of two hinged halves and act as a shaping cavity in order to give the ice cream the corresponding geometric shape, the two halves of the moulds comprising a filling funnel and three-dimensional shaping profiles for the ice cream, in order to create the geometric appearance, and being held together in the closed state by a locking mechanism.

11. Method according to claim 10, **characterised in that** the liquid level of the cryogenic liquid medium in the immersion bath is determined and compared with a desired level, the immersion bath being filled via a medium supply in order to maintain the liquid level if the actual value falls below the minimum value of the desired value level.

12. Method according to claim 10, **characterised in that** the moulds are filled with the ice cream mass in series or simultaneously by means of a metering apparatus.

13. Method according to claim 10, **characterised in that** sticks are placed in the ice cream at the same time as or after filling the moulds with the ice cream mass.

14. Method according to claim 10, **characterised in that** the moulds are transferred into the immersion bath by means of immersion.

15. Method according to claim 10, **characterised in that** treating the moulds using the heating apparatus involves immersion into a heat bath, or a hot air treatment.

## Revendications

1. Dispositif de fabrication de glace alimentaire, comprenant
- un bain d'immersion (1) avec une chambre intérieure (2) remplie de fluide cryogénique liquide,
- au moins une cassette (3) mobile dans la chambre intérieure (2) du bain d'immersion (1), dans laquelle sont disposés des moules (8) destinés à recevoir une masse de glace alimentaire,
- un système de remplissage (7) pour remplir les moules (8) avec la masse de glace alimentaire,
- un système d'équipement en bâtonnets pour mettre en place des bâtonnets,
**caractérisé en ce que** les moules (8) sont constitués de deux moitiés (13.1, 13.2) pouvant être ouvertes par rabattement, qui servent de matrice de façonnage afin de donner à la glace alimentaire la forme géométrique correspondante, sachant que les deux moitiés (13.1, 13.2) comprennent, afin de produire l'aspect géométrique, une trémie de remplissage (14) et des profils de façonnage tridimensionnels (18) pour la glace alimentaire, et sont maintenues ensemble dans l'état fermé par un mécanisme de fermeture.

2. Dispositif selon la revendication 1, **caractérisé en ce qu'**il est en outre prévu un système de chauffage (9) pour légèrement décongeler les moules (8) remplis de masse de glace alimentaire, en vue d'un traitement supplémentaire consécutif de la glace alimentaire.

3. Dispositif selon la revendication 1, **caractérisé en ce que** le bain d'immersion (1) comprend des capteurs afin de réguler le niveau de liquide du fluide cryogénique liquide dans la chambre intérieure (2) au moyen d'un réservoir de stockage (4) pour le fluide cryogénique qui est relié au bain d'immersion (1).

4. Dispositif selon la revendication 1, **caractérisé en ce qu'**il est prévu un système de levage par lequel, afin d'immerger la cassette (3), on effectue un relevage et un abaissement du bain d'immersion (1) ou alternativement un abaissement et un relevage de la cassette (3), sachant que le système de levage comprend une commande qui contrôle le mouvement de levage du système de levage en fonction du temps d'immersion des moules (8) immergés dans le bain d'immersion (1).

5. Dispositif selon la revendication 1, **caractérisé en ce qu'**il est prévu un système de transport par lequel les cassettes (3) peuvent être transportées jusqu'au bain d'immersion (1).

6. Dispositif selon la revendication 1, **caractérisé en ce que** la cassette (3) comprend des compartiments individuels séparés les uns des autres pour recevoir les moules individuels (8), sachant que le fond (15) de la cassette (3) est ouvert sur son côté inférieur, que les compartiments sont séparés les uns des autres par des parois intermédiaires (10) et que les moules (8) reposent sur des éléments porteurs (11) de part et d'autre des côtés longitudinaux (16) de la cassette (3).

7. Dispositif selon la revendication 1, **caractérisé en ce que**, pour la sécurité au travail, la cassette (3) est logée dans un caisson en tôle perforée ou en treillis métallique.

8. Dispositif selon la revendication 2, **caractérisé en ce que** le système de chauffage (9) comprend un bain chauffant ou une soufflerie d'air chaud.

9. Dispositif selon l'une des revendications 1 à 8, **caractérisé en ce qu'**un fil chauffant est en outre prévu dans le bain d'immersion (1).

10. Procédé de fabrication de glace alimentaire, selon lequel un moule est d'abord refroidi par un traitement avec un fluide cryogénique puis rempli avec la masse de glace alimentaire, comprenant :
a. préparation d'un bain d'immersion avec une chambre intérieure remplie du fluide cryogénique liquide,
b. transfert des moules dans le bain d'immersion pour un temps d'immersion spécifié pour le refroidissement des moules,
c. transport des moules refroidis hors du bain d'immersion et remplissage des moules avec de la masse de glace alimentaire,
d. congélation de la masse de glace alimentaire dans les moules pour une durée qui suffit pour congeler la masse de glace alimentaire à coeur, en évitant la formation de fissures,
e. mise en place de bâtonnets dans la masse de glace alimentaire, en même temps
que le remplissage des moules avec la masse de glace alimentaire ou après, **caractérisé en ce que** les moules sont constitués de deux moitiés pouvant être ouvertes par rabattement et servent de matrice de façonnage afin de donner à la glace alimentaire la forme géométrique correspondante, sachant que les deux moitiés des moules comprennent, afin de produire l'aspect géométrique, une trémie de remplissage et des profils de façonnage tridimensionnels pour la glace alimentaire, et sont maintenues ensemble dans l'état fermé par un mécanisme de fermeture.

11. Procédé selon la revendication 10, **caractérisé en ce qu'**on détermine le niveau de liquide du fluide cryogénique liquide et on le compare à un niveau de consigne, sachant que si la valeur réelle tombe en dessous de la valeur minimale du niveau de consigne, on effectue un remplissage du bain d'immersion par l'intermédiaire d'une alimentation en fluide afin de maintenir le niveau de liquide.

12. Procédé selon la revendication 10, **caractérisé en ce que** les moules sont remplis avec la masse de glace alimentaire simultanément ou en série par l'intermédiaire d'un système de dosage.

13. Procédé selon la revendication 10, **caractérisé en ce que** la mise en place de bâtonnets dans la glace alimentaire s'effectue avec ou après le remplissage des moules avec la masse de glace alimentaire.

14. Procédé selon la revendication 10, **caractérisé en ce que** le transfert des moules dans le bain d'immersion s'effectue par immersion.

15. Procédé selon la revendication 10, **caractérisé en ce que** le traitement des moules avec le système de chauffage comprend une immersion dans un bain chauffant ou un traitement à l'air chaud.
